# EUROPEAN PATENT SPECIFICATION

(11) **EP 1 826 332 B1**
(45) Date of publication and mention of the grant of the patent: **13.04.2016**
(21) Application number: 06290304.2
(22) Date of filing: 23.02.2006
(51) Int. Cl.: C04B 28/04, C04B 111/00, C04B 111/10, C04B 7/32, C04B 28/06, C04B 41/00, C04B 41/50, C04B 41/65, E04D 1/16

(54) **NEW ROOFING TILE WITH ENHANCED SURFACE DURABILITY AND PROCESSES FOR MANUFACTURING THE SAME**
DACHPFANNE MIT VERBESSERTER OBERFLÄCHENHALTBARKEIT UND PROZESSE ZU DEREN HERSTELLUNG
TUILE À DURABILITÉ DE SURFACE AMÉLIORÉE ET PROCÉDÉS POUR SA FABRICATION

(43) Date of publication of application: 29.08.2007
(73) Proprietor: Monier Roofing GmbH, 61440 Oberursel (DE)
(72) Inventor: Drechsler, Andreas, 64850 Schaafheim (DE); Klein, Jürgen, 63110 Rodgau-Jügesheim (DE); Yziquel, Florence, 63067 Offenbach (DE); Chen, Jeffery, 69003 Lyon (FR); Fourdrin, Emmanuel, 38300 Meyrie (FR)
(74) Representative: Hirsch & Associés

(56) References cited:
- EP-A- 0 970 931
- EP-A- 1 050 518
- WO-A-2005/037725
- US-A- 3 664 854
- US-A- 4 366 209
- US-A1- 2001 007 711
- US-A1- 2004 035 328
- SMITH A ET AL: "Role of a small addition of acetic acid on the setting behavior and on the microstructure of a calcium aluminate cement" J AM CERAM SOC; JOURNAL OF THE AMERICAN CERAMIC SOCIETY AUGUST 2005, vol. 88, no. 8, August 2005 (2005-08), pages 2079-2084, XP002386727

## Description

### FIELD OF THE INVENTION

The invention relates to a novel roofing tile with enhanced surface durability, especially smoothness and acid-erosion resistance. The invention also provides processes for making the same.

### BACKGROUND OF THE INVENTION

In the following, the cement chemistry notation will be used: C = CaO; A = Al₂O₃ ; S = SiO₂ ; ŝ = SO₃, H = H₂O.

WO-A-0172658 discloses a hydraulic binder for forming a non-efflorescing cementitious body, comprising a source of calcium aluminate, a source of calcium silicate, a source of sulfate and a source of reactive silica, especially comprising 10-49% by weight of a source of active silica (based on the weight of the dry hydraulic binder), the balance comprising 40-90% by weight of the source of calcium aluminate selected from calcium sulfoaluminate cement or clinker, said source of calcium aluminate having at least 25% alumina or a C/A ratio of less than 3, 5-55% by weight of Portland cement or clinker as the source of calcium silicate, and 3-50% by weight of a source of sulphate, at least 25% of which is SO₃. The said ingredients are in relative proportions to form, upon hydration, the products monosulfate (C₃A.ŝ.12H), hydrated alumina (AH₃), as well as ettringite (C3A.3Cŝ.32H) and strätlingite (C₂ASH₈). This document aims at avoiding efflorescence, the efficacy of which is based on the presence of sulfate and reactive silica to form said hydration products and to minimize the formation of portlandite (CH). The presence of a sulfate source and a reactive silica source is thus mandatory in this document.

EP-A-0356086 discloses a hydraulic cement forming compositions which comprise a high alumina cement blended with a latently hydraulic or pozzolanic material, especially blast furnace slag and silica fume, such that upon hydration, strätlingite is formed. This hydrate effectively blocks the conversion of calcium aluminate hydrates such as CAH₁₀ and C₂AH₈ to the denser C₃AH₆ phase, thus counteracting the normal strength loss of CAC binders during aging (a phenomenon in the art known as "conversion"). Here the technical problem is to maintain a high mechanical strength, which is not a critical property for the application intended in the current invention.

There is however still a need to provide a cementitious mixture that will provide a hard, durable surface, which has excellent acid erosion resistance and an ability to maintain a smooth surface during natural weathering. An additional objective is to provide a means of applying said cementitious mixture as a thin coating (0.5-2.0 mm) on various substrates, particularly roofing tiles.

### SUMMARY OF THE INVENTION

The invention provides a roofing tile comprising:
(a) a substrate comprising :
   i) sand of a diameter of 4 mm or less;
   ii) a binder based on Portland cement and
(b) a coating disposed on said substrate, said coating resulting from hydration and hardening of a mixture comprising :
   i) a hydraulic binder comprising at least 35% by weight of alumina, where the hydraulic binder comprises:
      - at least 60% by weight of a source of calcium aluminate comprising a calcium aluminate cement having an alumina content higher than 35%, and
      - no more than 1% by weight of sulfate,
      - less than 50 parts by weight of fly ash for 100 parts of calcium aluminate cement or 20-50 parts of other pozzolanic material having an alumina content of at least 20% by weight for 100 parts of calcium aluminate cement,
   ii) 50-200 parts by weight of sand for 100 parts of calcium aluminate cement; where the sand has a grading of 0.6 mm or less;
   iii) less than 10 parts by weight of fine limestone filler for 100 parts of calcium aluminate cement ;
   iv) less than 6 parts by weight of pigment for 100 parts of calcium aluminate cement ;
   v) less than 1.5 parts by weight of superplasticizer for 100 parts of calcium aluminate cement ;
   vi) less than 1.5 parts by weight of rheology modifier for 100 parts of calcium aluminate cement ;
   vii) less than 0.3 parts by weight of retarder for 100 parts of calcium aluminate cement ;
   viii) less than 0.3 parts by weight of defoamer for 100 parts of calcium aluminate cement ;
   ix) less than 0.2 parts by weight of thickener for 100 parts of calcium aluminate cement ;
      the parts of iv)-vii) being expressed in terms of solids contents ; and
      the parts by weight of viii) being expressed in terms of active component ;
   the sulfate content in the mixture not exceeding 1% by weight and wherein the hydration is obtained with a water to calcium aluminate source ratio of less than 0.4.

In one embodiment, the hydraulic binder comprises less than 0.5% by weight of sulfate, and preferably is substantially free of sulfate.

In another embodiment, the source of calcium aluminate comprises a calcium aluminate cement having an alumina content higher than 45%.

In another embodiment, the pozzolanic material, has an alumina content of at least 30% by weight.

In another embodiment, said hydraulic binder comprising at least 80% by weight of a source of calcium aluminate.

In another embodiment, the coating comprises additives such as retarders, accelerators, superplasticizers, rheological modifiers, defoamers, and thickeners, and preferably a combination of a superplasticizer and retarder.

In another embodiment, the hydration is obtained with a water to calcium aluminate source ratio between 0.25 and 0.40.

In another embodiment, the tile material further comprises sand with a maximum diameter of less than 1mm.

In another embodiment, tile material comprises at least 32.5% by weight of binder, preferably about 50%.

In another embodiment, the coating has a density of from 2.0 to 2.3.

In another embodiment, the tile further comprises a coating on it.

The invention also provides a process of manufacturing the roofing tile of the invention, comprising the steps of coating an exterior surface of a freshly made substrate with a paste and curing the article and the coating together.

The invention further provides a process for manufacturing a roofing tile, comprising the steps of:
(a) providing a substrate comprising;
   i) sand of diameter of 4 mm or less ;
   ii) a binder based on Portland cement and
(b) mixing water and a cementitious mixture comprising :
   i) a hydraulic binder comprising at least 35% by weight of alumina, where the hydraulic binder comprises :
      - at least 60% by weight of a source of calcium aluminate comprising a calcium aluminate cement having an alumina content higher than 35%, and
      - no more than 1.0% by weight of sulfate,
      - less than 50 parts by weight of fly ash for 100 parts of calcium aluminate cement or 20-50 parts of other pozzolanic material having an alumina content of at least 20% by weight for 100 parts of calcium aluminate cement;
   ii) 50-200 parts by weight of sand for 100 parts of calcium aluminate cement; where the sand has a grading of 0.6 mm or less;
   iii) less than 10 parts by weight of fine limestone filler for 100 parts of calcium aluminate cement ;
   iv) less than 6 parts by weight of pigment for 100 parts of calcium aluminate cement ;
   v) less than 1.5 parts by weight of superplasticizer for 100 parts of calcium aluminate cement ;
   vi) less than 1.5 parts by weight of rheology modifier for 100 parts of calcium aluminate cement ;
   vii) less than 0.3 parts by weight of retarder for 100 parts of calcium aluminate cement ;
   viii) less than 0.3 parts by weight of defoamer for 100 parts of calcium aluminate cement ;
   ix) less than 0.2 parts by weight of thickener for 100 parts of calcium aluminate cement ;
      the parts of iv)-vii) being expressed in terms of solids contents ; and
      the parts by weight of viii) being expressed in terms of active component ;
      the sulfate content in the mixture not exceeding 1% by weight and the water to calcium aluminate source ratio being less than 0.4. and
(c) applying on said substrate a coating slurry of the mixture of step (b); and
(d) causing hydration of said coating on the substrate of step (c) into the roofing tile.

This process is useful for the manufacture of the tiles of the invention.

In an embodiment, the coating slurry has a slump value between 135-175 mm, preferably 140-160 mm, for a period of at least 20 minutes, preferably at least 30 minutes.

In an embodiment, the air content of the slurry is less than 10%, and preferably closer to 5%.

In one embodiment, steps (ii) and (iii) are carried out as a co-extrusion.

In one embodiment, step (iii) is carried out by a brush application.

In one embodiment, step (iii) is carried out by the bell process.

In another embodiment, the process further comprises a curing step at a relative humidity of from 70% to 100% and at a temperature of from 0°C to 60°C and for a period of from 30 minutes to 24 hours.

In another embodiment, the process further comprises a post-treatment acid wash.

The invention is based on the use of a high alumina content hydraulic binder, with very limited amount of sulfate and preferably no sulfate. The invention may thus provide a binder with a maximum alumina content, which would not have been possible in prior art formulations due to the diluting effect of added sulfate. A high alumina content in the binder is desirable for acid resistance due to the low solubility above pH 4 of hydrated alumina, the ultimate decomposition product of calcium aluminate hydrates in acidic or leaching environments. Moreover, the minimization of sulfate in the invention reduces the water demand in the system, thus allowing for higher densities and improved durability in the invention. Prior art compositions have correspondingly lower densities due to the high water demand of sulfoaluminate compounds such as monosulfate and ettringite. These compounds represent the principle phases formed in calcium aluminate systems containing high additions of sulfate. Monosulfate and ettringite are substantially non-existent in the invention (i.e., they may, at most, represent a few percent, e.g. less than 5%).

### BRIEF DESCRIPTION OF THE DRAWINGS

- Figure 1 is a schematic representation of a process of one embodiment of the invention.
   Figure 2 is a schematic representation of the process of another embodiment of the invention
- Figure 3 is a Scanning Electron Microscopy (SEM) micrograph of a cross section of a tile, according to example 2, exposed for ten years to natural weathering.

### DETAILED DESCRIPTION OF EMBODIMENTS OF THE INVENTION

### Cementitious material

One characteristic of the invention is the very low amount of source of sulfate and preferably its substantial absence. Components comprising low amounts of sulfate may thus be present, as long as their content is such that the upper limit for the sulfate content in the final composition is not exceeded.

Calcium aluminates are combinations of aluminum oxide, Al₂O₃, and calcium oxide, CaO. Calcium aluminate may be generated in situ by the use of separate sources of calcium oxide and alumina as ingredients, or, alternatively, alumina can be added afterwards to obtain the required alumina concentration. The source of calcium aluminate cement is preferably a hydraulic binder such as Fondu (37% Al₂O₃), Secar 51 (50% Al₂O₃), and Secar 71 (68% Al₂O₃). The calcium aluminates may be crystallized in several different anhydrous phases such as (using cement notation) CA, C₃A and C₁₂A₇. The source of pozzolanic material can be ground blast furnace slag or fly ash.

In the current invention the pozzolanic material represents less than 50% by weight of cement, preferably between 10 and 30% by weight. The pozzolanic material has a high Al₂O₃ content - at least above 20%, and preferably above 30%. The particle size distribution of fly ash can vary widely depending on the process. The D50 (mean particle size) of the fly ash can range can be between 2 - 60µm as measured in the wet process on a Malvern laser granulometer. The amount of fly ash added may be limited by its granulometry. The preferred D50 granulometery of the fly ash is 10 - 20µm.

A fine limestone filler may also be added to the slurry for improved compaction of the slurry or for reduced strength loss. The latter effect may arise from the formation of a carboaluminate phase, C₄AĈH₁₁. This phase tends to form at the expense of C₂AH₈ and C₃AH₆, thus hindering (but not necessarily permanently preventing) conversion (see H.F.W. Taylor, Cement Chemistry, 2nd ed., Thomas Telford, London, 1997). The limestone filler, which may serve as a replacement or partial replacement of the pozzolanic material, can represent up to about 10 parts per 100 parts cement in the slurry. The fine limestone can have a D50 mean particle size of 1 -10µm, and preferably between 1 - 5µm. It should be noted, however, that the intrinsic acid resistance of the slurry may decrease with increasing limestone content, due to the higher solubility of limestone relative to AH₃. The specific dosage of limestone filler will ultimately depend on the priorities placed on the rheological, strength, and durability properties of the slurry/coating.

Sand of a fine grading, from 0.0-0.6 mm, is used to ensure a smooth surface. This will also enhance the acid and freeze-thaw performance of the body. Durability can also be enhanced by optimizing the type and quantity of sand.

Additives known in the art to be effective with calcium aluminates based binders including defoamers, retarders typically citric acid, plasticizers, superplasticizers (e.g., polycarboxylate ether), pigments (e.g., inorganic or organic), rheology enhancers (e.g., acrylates emulsion), and thickeners (cellulose or wellan gum) may be added to achieve the required fresh slurry properties.

A typical composition for a slurry would be the following (in parts by weight):

| Component | Parts | Preferred Parts^{a} |
|---|---|---|
| Fine sand, 0-0.6mm | 50-200 | 130 |
| Calcium aluminate cement | 100 | 100 |
| Fly-ash (or other pozzolanic material) | <50 | 20 |
| Fine limestone filler | <10 | - |
| Pigment*^{b}* | <6 | 3 |
| Superplasticizer*^{b}* | <1.5 | 0.03 |
| Rheology modifier*^{b}* | <1.5 | 0.30 |
| Retarder*^{b}* | <0.3 | 0.10 |
| Defoamer*^{c}* | <0.3 | 0.15 |
| Thickener | <0.2 | - |
| Water | <40 | 36 |

| | | |
|---|---|---|
| ^{a} Cited for a coextrusion process. ^{b} Expressed in terms of solids content ^{c} Expressed in terms of active component. | | |

As illustrated in the preferred embodiment, a water to calcium aluminate source ratio lower than 0.4 can be used. This relatively low amount of water results in a dense final product.

### Process for manufacturing

A general process for manufacturing the roofing tile comprises the following steps:
(i) preparing a concrete roofing tile substrate;
(ii) preparing a calcium aluminate cement rich slurry;
(iii) applying the slurry to the roofing tile substrate;
(iv) curing the coating and substrate together; and
(v) optionally post-treating the coating on the substrate, notably for aesthetic and/or durability reasons.

The preparation of the concrete roofing tile substrate of the invention may be carried out using the processes disclosed in US-P-5017230 or US-P-4986744.

US-P-5017230 describes a process for manufacturing stratified pieces such as roofing tiles by successive and independent extrusion of concrete, which is deposited on a limited part of the moulds for the first layer. Thereafter follows a compacting and beveling step before the application of the second layer to completely fill the mould. US-P-4986744 describes the high pressure application of the top finish coating layer of a roofing tile onto the already pre-shaped and pre-compacted bottom layer.

The process of manufacturing the roofing tiles of the invention comprises first producing the concrete tile body or substrate by standard methods of mixing and extrusion of the tile body material using with a standard tile machine. This technology is known in the art and is described in patents US-P-3193903 to White, and US-P-4666648 to Brittain.

The calcium aluminate based slurry can be prepared in a batch process or in a continuously mixed process. The preferred method is the batch mixed process where the wet and dry ingredients are placed in a mixer and agitated for 1 - 5 minutes as is well known in the art of preparing cement slurry.

The continuous mix method may be advantageous in some industrial settings where the wet and dry ingredients can be pre-blended independently, and then combined in a high shear short mixer for a period of 5 - 20 seconds before the slurry is applied to the substrate.

In a third process step the tile is then coated by extrusion with a slurry. The slurry is batched and prepared prior to mixing. The method of applying the slurry may vary, depending on the particular factory process, as well as the desired surface aesthetics (e.g., mono- versus multi-colored). Typical slurry application processes include coextrusion, brush application, and the so-called "bell" (or curtain coating) process. Each process usually possesses distinctive rheological and formulation requirements. After the slurry is applied, the tile and coating are cured together under standard curing conditions (e.g., relative humidity of 70-100%, temperature 10°C-60°C for a period of 30 min-24 hours).

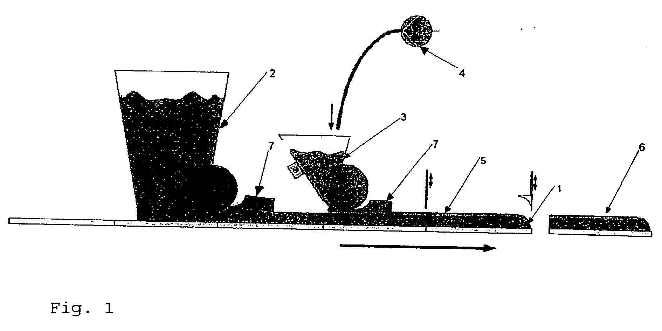

One embodiment of the present invention uses a coextrusion process, as illustrated in Figure 1. The body of the tile is first extruded (1) using the tile body material (2). Then the slurry formulation (3), after mixing, is pumped via a pump (4) and extruded directly as a layer (5) onto the underlying fresh body. This inline process thus obviates the need to transport the tile body to a separate slurry application unit. By this process it is possible to produce a flat or profiled roofing tile (6), which, with the action of the smoothing bars (7), possesses a smooth and homogeneous surface. The tile is then cured in standard conditions. The double slipper method for coextrusion (e.g. as disclosed above and in relation with US-P-4986744) may be alternatively simulated by a double roller method, whereby the body and slurry are extruded sequentially, rather than simultaneously.

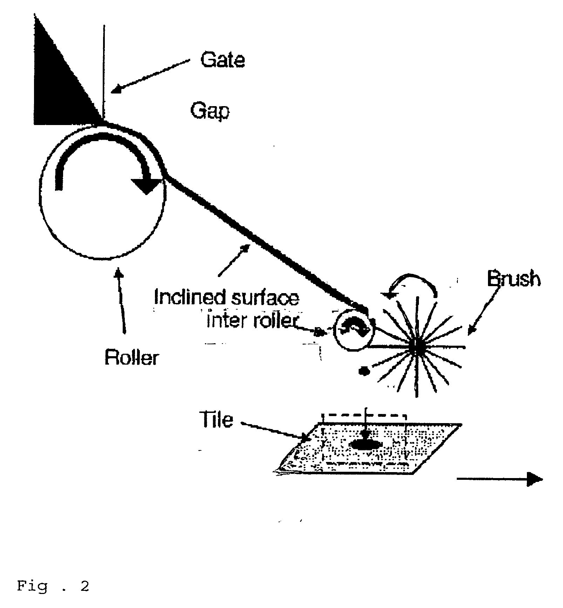

In another embodiment, the slurry is applied by a brush application, as illustrated in Figure 2. In this process, a relatively fluid slurry flows from its reservoir down a declined surface, and ultimately to the junction between the rotating inter-roller and brush. The bristles of the brush project the slurry as droplets onto the target tile. The size and speed of the droplets depend on the flow rate of the slurry as well as the rotation speeds of the roller and brush. Multi-colored tile designs are possible from this process. The body and slurry coating are then cured under standard conditions.

In yet another embodiment, the slurry is applied by the bell process, where a fluid slurry is passed over a bell-shaped piece, thereby creating a curtain through which the body substrate is passed. After the slurry is deposited on the body, the two are then cured together under standard conditions.

In the above processes, the mortar for the tile body is usually produced by first mixing the solids in a batch mixer (any batch mixer suffices), then introducing the liquids and mixing the slurry in 2 stages, with a moisture control test conducted in between. The overall moisture content of the tile body is adjusted to a sufficiently low value (typically 6.5-8.0% depending on the initial state of the raw materials) so as to give the desired rheology and to prevent undesirable bubbles in the overlying slurry. The tile bodies may be extruded using roller and smoothing bars as known in the art. The tile body weight may range from 3.0 to 6.0 kg for tile dimensions that are typically 4300 mm by 3300 mm.

As already indicated above, the slurry is mixed (e.g. using a high-shear mixer) for 2 to 5 minutes, depending on the particular type of mixer used. The rheology of the fresh mix can be assessed with a slump test. The equipment typically used for such a test is described in DIN 1048-T1 (slump table) and EN 196-3 (test sample receptacle). The process, adapted from various standards, involves first filling a cylindrical sample receptacle (8 cm diameter, 4 cm height) with the fresh slurry. The receptacle, which is placed in the center of the slump table, is then removed. A coextruded slurry should preferably show nearly zero initial slump under its own weight. After the slump table is lifted 15 times (15 knocks) to a fixed height, the slump of the slurry is measured; an average of 2 perpendicular diameters is taken. Optimal coextrusion performance is obtained with slump values between 135-175 mm, preferably 140-160 mm. To ensure consistent large-scale production this slump should be maintained for a period of at least 20 minutes, preferably at least 30 minutes, depending on the particular manufacturing process. Furthermore, a good quality slurry has a smooth and creamy consistency and a lack of excessively large air bubbles. While there is no rigorous limit on the air content of the fresh slurry, it should be less than 10%, and preferably closer to 5%.

To reach the target fresh slurry properties mentioned above for the coextruded slurry, one will use the proper combination and type of additives, as appreciated by the skilled worker in the art. A combination of a superplasticizer based on polycarboxylate polyox molecules and an effective calcium aluminate retarder (e.g., citric acid) can provide excellent fluidity and workability for 1 hour or longer. Plasticizers based on naphthalene-type and especially melamine-type resins are not preferred since the workability may not be sufficient for practical use. Rheological modifiers are added to facilitate the pumpability of the slurry. Defoamers are used to reduce the overall air content as well as the large, obtrusive bubbles that have deleterious effects on the aesthetics and the durability of the surface.

After curing, the tile product may be further treated by acid washing for cleaning purposes, or by coating with paints, clear-coats, and other protective coatings.

### Roofing tile

The resulting roofing tile of the invention comprises a relatively thin coating, or slurry, based on a calcium aluminate cement binder, typically with a thickness of 0.5-2 mm, and especially about 1 mm.

The high aluminate content of the slurry of the roofing tile of the invention encourages the formation of a dense layer of hydrated alumina (AH₃) gel. Depending on the particular curing conditions, this hydrate may form during the initial curing process. The formation of AH₃ can also be significantly accelerated upon exposure of the slurry to acidic solution. This acid exposure can be an intentional post-treatment, such as a brief acid wash of the slurry at pH values above 4, or preferably, the acid can be introduced naturally in the form of acid rain during natural weathering. Both routes will produce a dense AH₃ layer due to the infilling of surface pores by the AH₃ gel. The layer, whose thickness can be tens to hundreds of microns, thus serves as a protective barrier layer that is dense, hard, and subsequently resistant to erosion and other forms of degradation. The low solubility of AH₃ above pH 4 further increases the erosion resistance of the surface. Moreover, the formation of the AH₃ layer results in a smooth surface, which is useful in reducing the potential for colonization by microorganisms such as algae and lichens since they would not grow in the irregularities of the surface

The substrate, generally 6-20 mm in thickness, possesses coarser aggregates than the slurry, using standard sand 0-4 mm in diameter. Small amounts of inorganic standard pigments and of plasticizers may be added. The binder in the substrate is generally comprised of OPC (Ordinary Portland Cement) or OPC and pozzolanic material (with the ratio of OPC to pozzolanic material ranging from 100:0 to 70:30). A typical composition for the tile body is given below.

| Component | Kg |
|---|---|
| Sand, 0-4mm | 1150 |
| Ordinary Portland Cement | 290 |
| Pigment*^{a}* | 8.0 |
| Superplasticizer*^{a}* | 0.0-0.5 |
| Water/Cement | 0.4 |

| | |
|---|---|
| ^{a} Expressed in terms of solids content. | |

### EXAMPLES

The following examples, which are based on the coextrusion process, are illustrative of the invention and shall not be considered limiting the scope thereof. The amounts are expressed in kg.

### Example 1.

| Component | **Example 1** |
|---|---|
| Fine sand, 0-0.6 mm | 130 |
| Calcium aluminate cement | 100 |
| Fly-ash | 20 |
| Pigment*^{a}* | 3.0 |
| Superplasticizer*^{a} (Premiafluid 194)* | 0.03 |
| Rheology enhancer*^{a} (Mowilith VDM618)* | 0.30 |
| Retarder*^{a} (citric acid)* | 0.10 |
| Defoamer*^{b} (Serdas GBR)* | 0.15 |
| Water | 36.0 |

| | |
|---|---|
| Expressed in terms of solids content*^{a}* or active component*^{b}*. | |

The particular example is produced from the coextrusion process depicted in Figure 1.

The slurry is mixed using a high-shear mixer for 2 to 5 minutes.

**Table. Fresh slurry properties of Example 1.**

| | |
|---|---|
| Slump at 0 min (mm) | 155 |
| After 45 min (mm) | 165 |
| After 75 min (mm) | 160 |
| Air content (%) | 4.8% |

The slurry is then pumped using an eccentric screw pump operating at standard conditions and is delivered by a pressure pipe to the dosing hopper. Again, for extrusion standard roller and smoothing bars of the prior art may be used at standard operating conditions.

### Example 2.

| Component | **Example 2** |
|---|---|
| Fine sand, 0-0.6 mm | 130 |
| Calcium aluminate cement | 100 |
| Fly-ash | 20 |
| Pigment*^{a}* | 3.0 |
| Plasticizer*^{a} (melamine-type)* | 0.20 |
| Rheology enhancer^{a} *(Mowilith VDM618)* | - |
| Retarder*^{a} (citric acid)* | - |
| Defoamer*^{b} (Serdas GBR)* | - |
| Water | 38-40 |

| | |
|---|---|
| Expressed in terms of solids content*^{a}* or active component*^{b}*. | |

The tiles of example 2 have been produced using a similar process to that depicted in example 1.

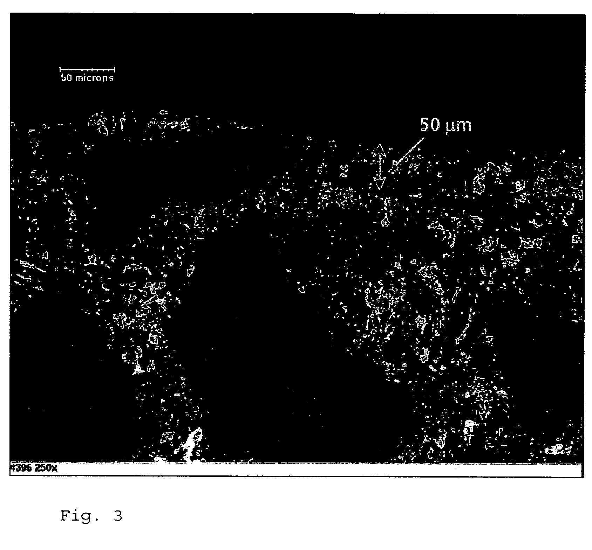

Figure 3 is a Scanning Electron Microscopy (SEM) micrograph of a cross section of the tile from example 2, exposed for 10 years in natural weathering in a typical western European climate. SEM analysis was conducted in a back scattered electron (BSE) mode using 12kV, 1nA (measured with a Faraday cup) and a 12mm working distance.

As seen in Figure 3, a dense, protective layer of AH₃ has formed spontaneously during natural weathering. This layer (here about 50 µm in thickness) serves as a protective and durable barrier, especially against erosion and roughening during weathering.

## Claims

1. A roofing tile comprising:
(a) a substrate comprising :
i) sand of a diameter of 4 mm or less;
ii) a binder based on Portland cement and
(b) a coating disposed on said substrate, said coating resulting from hydration and hardening of a mixture comprising :
i) a hydraulic binder comprising at least 35% by weight of alumina, where the hydraulic binder comprises:
- at least 60% by weight of a source of calcium aluminate comprising a calcium aluminate cement having an alumina content higher than 35%, and
- no more than 1% by weight of sulfate,
- less than 50 parts by weight of fly ash for 100 parts of calcium aluminate cement or 20-50 parts of other pozzolanic material having an alumina content of at least 20% by weight for 100 parts of calcium aluminate cement,
ii) 50-200 parts by weight of sand for 100 parts of calcium aluminate cement; where the sand has a grading of 0.6 mm or less;
iii) less than 10 parts by weight of fine limestone filler for 100 parts of calcium aluminate cement ;
iv) less than 6 parts by weight of pigment for 100 parts of calcium aluminate cement ;
v) less than 1.5 parts by weight of superplasticizer for 100 parts of calcium aluminate cement ;
vi) less than 1.5 parts by weight of rheology modifier for 100 parts of calcium aluminate cement ;
vii) less than 0.3 parts by weight of retarder for 100 parts of calcium aluminate cement ;
viii) less than 0.3 parts by weight of defoamer for 100 parts of calcium aluminate cement ;
ix) less than 0.2 parts by weight of thickener for 100 parts of calcium aluminate cement ;
the parts of iv)-vii) being expressed in terms of solids contents ; and
the parts by weight of viii) being expressed in terms of active component ;
the sulfate content in the mixture not exceeding 1% by weight and wherein the hydration is obtained with a water to calcium aluminate source ratio of less than 0.4.

2. The roofing tile of claim 1, wherein the hydraulic binder comprises less than 0.5% by weight of sulfate, and preferably is substantially free of sulfate.

3. The roofing tile of any one of claims 1 to 2, wherein the source of calcium aluminate comprises a calcium aluminate cement having an alumina content higher than 45%.

4. The roofing tile of any one of claims 1 to 3, wherein pozzolanic material, has an alumina content of at least 30% by weight.

5. The roofing tile of any one of claims 1 to 4, wherein said hydraulic binder comprising at least 80% by weight of a source of calcium aluminate.

6. The roofing tile of any one of claims 1 to 5, wherein the hydration is obtained with a water to calcium aluminate source ratio between 0.25 and 0.40.

7. The roofing tile of any one of claims 1 to 6, wherein the tile material further comprises sand with a maximum diameter of less than 1 mm.

8. The roofing tile of any one of claims 1 to 7, wherein the tile material comprises at least 32.5% by weight of binder, preferably about 50%.

9. The roofing tile of any one of claims 1 to 8, wherein the coating has a density of from 2.0 to 2.3 g/cc.

10. The roofing tile of any one of claims 1 to 9, further comprising a coating on it.

11. A process of manufacturing the roofing tile of any one of claims 1 to 10, comprising the steps of coating an exterior surface of a freshly made substrate with a paste and curing the article and the coating together.

12. A process for manufacturing a roofing tile, comprising the steps of:
(a) providing a substrate comprising;
i) sand of diameter of 4 mm or less ;
ii) a binder based on Portland cement and
(b) mixing water and a cementitious mixture comprising :
i) a hydraulic binder comprising at least 35% by weight of alumina, where the hydraulic binder comprises :
- at least 60% by weight of a source of calcium aluminate comprising a calcium aluminate cement having an alumina content higher than 35%, and
- no more than 1.0% by weight of sulfate,
- less than 50 parts by weight of fly ash for 100 parts of calcium aluminate cement or 20-50 parts of other pozzolanic material having an alumina content of at least 20% by weight for 100 parts of calcium aluminate cement;
ii) 50-200 parts by weight of sand for 100 parts of calcium aluminate cement; where the sand has a grading of 0.6 mm or less;
iii) less than 10 parts by weight of fine limestone filler for 100 parts of calcium aluminate cement ;
iv) less than 6 parts by weight of pigment for 100 parts of calcium aluminate cement ;
v) less than 1.5 parts by weight of superplasticizer for 100 parts of calcium aluminate cement ;
vi) less than 1.5 parts by weight of rheology modifier for 100 parts of calcium aluminate cement ;
vii) less than 0.3 parts by weight of retarder for 100 parts of calcium aluminate cement ;
viii) less than 0.3 parts by weight of defoamer for 100 parts of calcium aluminate cement ;
ix) less than 0.2 parts by weight of thickener for 100 parts of calcium aluminate cement ;
the parts of iv)-vii) being expressed in terms of solids contents ; and
the parts by weight of viii) being expressed in terms of active component ;
the sulfate content in the mixture not exceeding 1% by weight and the water to calcium aluminate source ratio being less than 0.4. and
(c) applying on said substrate a coating slurry of the mixture of step (b); and
(d) causing hydration of said coating on the substrate of step (c) into the roofing tile.

13. The process of claim 12 wherein the roofing tile is as claimed in any one of claims 1 to 10.

14. The process of claim 12 or 13 wherein the coating slurry has a slump value between 135-175 mm, preferably 140-160 mm, for a period of at least 20 minutes, preferably at least 30 minutes.

15. The process of any one of claims 12 to 14 wherein the air content of the slurry is less than 10%, and preferably closer to 5%.

16. The process of any one of claims 12 to 15 wherein steps (b) and (c) are carried out as a co-extrusion.

17. The process of any one of claims 12 to 15 wherein step (c) is carried out by a brush application.

18. The process of any one of claims 12 to 15 wherein step (c) is carried out by the bell process.

19. The process of any one of claims 12 to 18 which further comprises a curing step at a relative humidity of from 70% to 100% and at a temperature of from 0°C to 60°C and for a period of from 30 minutes to 24 hours.

20. The process of any one of claims 12 to 19, further comprising a post-treatment acid wash.

## Patentansprüche

1. Dachziegel umfassend:
(a) ein Substrat umfassend:
i) Sand eines Durchmessers von 4 mm oder weniger;
ii) ein Bindemittel auf der Basis von Portlandzement und
b) eine Beschichtung, die sich auf dem Substrat befindet, wobei die Beschichtung aus der Hydratisierung und Härtung einer Mischung resultiert, die Folgendes umfasst:
i) ein hydraulisches Bindemittel umfassend mindestens 35 Gew.-% Aluminiumoxid, wobei das hydraulische Bindemittel Folgendes umfasst:
- mindestens 60 Gew.-% einer Quelle von Calciumaluminat umfassend einen Calciumaluminatzement, der einen Aluminiumoxidgehalt von über 35 % aufweist, und
- nicht mehr als 1 Gew.-% Sulfat,
- weniger als 50 Gewichtsteile Flugasche pro 100 Teile Calciumaluminatzement oder 20-50 Teile anderes puzzolanisches Material, das einen Aluminiumoxidgehalt von mindestens 20 Gew.-% pro 100 Teile Calciumaluminatzement aufweist,
ii) 50-200 Gewichtsteile Sand pro 100 Teile Calciumaluminatzement; wobei der Sand eine Körnung von 0,6 mm oder weniger aufweist;
iii) weniger als 10 Gewichtsteile feinen Kalksteinfüllstoff pro 100 Teile Calciumaluminatzement ;
iv) weniger als 6 Gewichtsteile Pigment pro 100 Teile Calciumaluminatzement;
v) weniger als 1,5 Gewichtsteile Superweichmacher pro 100 Teile Calciumaluminatzement;
vi) weniger als 1,5 Gewichtsteile Rheologiemodifikator pro 100 Teile Calciumaluminatzement;
vii) weniger als 0,3 Gewichtsteile Abbindeverzögerer pro 100 Teile Calciumaluminatzement;
viii) weniger als 0,3 Gewichtsteile Entschäumungsmittel pro 100 Teile Calciumaluminatzement;
ix) weniger als 0,2 Gewichtsteile Verdickungsmittel pro 100 Teile Calciumaluminatzement;
wobei die Teile von iv)-vii) als Feststoffgehalte ausgedrückt sind; und
die Gewichtsteile von viii) als aktive Komponente ausgedrückt sind;
wobei der Sulfatgehalt in der Mischung 1 Gew.-% nicht übersteigt und wobei die Hydratisierung mit einem Verhältnis von Wasser zu Calciumaluminatquelle von weniger als 0,4 erhalten wird.

2. Dachziegel nach Anspruch 1, wobei das hydraulische Bindemittel weniger als 0,5 Gew.-% Sulfat umfasst und bevorzugt im Wesentlichen frei von Sulfat ist.

3. Dachziegel nach einem der Ansprüche 1 bis 2, wobei die Quelle von Calciumaluminat einen Calciumaluminatzement umfasst, der einen Aluminiumoxidgehalt von über 45 % aufweist.

4. Dachziegel nach einem der Ansprüche 1 bis 3, wobei das puzzolanische Material einen Aluminiumoxidgehalt von mindestens 30 Gew.-% aufweist.

5. Dachziegel nach einem der Ansprüche 1 bis 4, wobei das hydraulische Bindemittel mindestens 70 Gew.-% eine Quelle von Calciumaluminat umfasst.

6. Dachziegel nach einem der Ansprüche 1 bis 5, wobei die Hydratisierung mit einem Verhältnis von Wasser zu Calciumaluminatquelle zwischen 0,25 und 0,40 erhalten wird.

7. Dachziegel nach einem der Ansprüche 1 bis 6, wobei das Ziegelmaterial ferner Sand mit einem Höchstdurchmesser von weniger als 1 mm umfasst.

8. Dachziegel nach einem der Ansprüche 1 bis 7, wobei das Ziegelmaterial mindestens 32,5 Gew.-% Bindemittel, bevorzugt etwa 50 %, umfasst.

9. Dachziegel nach einem der Ansprüche 1 bis 8, wobei die Beschichtung eine Dichte von 2,0 bis 2,3 g/cm³ aufweist.

10. Dachziegel nach einem der Ansprüche 1 bis 9, ferner eine Beschichtung darauf aufweisend.

11. Verfahren für die Herstellung des Dachziegels nach einem der Ansprüche 1 bis 10, umfassend die Schritte des Beschichtens einer Außenfläche eines frisch hergestellten Substrats mit einer Paste und zusammen Aushärtens des Artikels und der Beschichtung.

12. Verfahren für die Herstellung eines Dachziegels, umfassend die Schritte des:
(a) Bereitstellens eines Substrats umfassend:
i) Sand eines Durchmessers von 4 mm oder weniger;
ii) ein Bindemittel auf der Basis von Portlandzement und
(b) Mischens von Wasser und einer zementhaltigen Mischung umfassend:
i) ein hydraulisches Bindemittel umfassend mindestens 35 Gew.-% Aluminiumoxid, wobei das hydraulische Bindemittel Folgendes umfasst:
- mindestens 60 Gew.-% einer Quelle von Calciumaluminat umfassend einen Calciumaluminatzement, der einen Aluminiumoxidgehalt von über 35 % aufweist, und
- nicht mehr als 1 Gew.-% Sulfat,
- weniger als 50 Gewichtsteile Flugasche pro 100 Teile Calciumaluminatzement oder 20-50 Teile anderes puzzolanisches Material, das einen Aluminiumoxidgehalt von mindestens 20 Gew.-% pro 100 Teile Calciumaluminatzement aufweist,
ii) 50-200 Gewichtsteile Sand pro 100 Teile Calciumaluminatzement; wobei der Sand eine Körnung von 0,6 mm oder weniger aufweist;
iii) weniger als 10 Gewichtsteile feinen Kalksteinfüllstoff pro 100 Teile Calciumaluminatzement ;
iv) weniger als 6 Gewichtsteile Pigment pro 100 Teile Calciumaluminatzement;
v) weniger als 1,5 Gewichtsteile Superweichmacher pro 100 Teile Calciumaluminatzement;
vi) weniger als 1,5 Gewichtsteile Rheologiemodifikator pro 100 Teile Calciumaluminatzement;
vii) weniger als 0,3 Gewichtsteile Abbindeverzögerer pro 100 Teile Calciumaluminatzement;
viii) weniger als 0,3 Gewichtsteile Entschäumungsmittel pro 100 Teile Calciumaluminatzement;
ix) weniger als 0,2 Gewichtsteile Verdickungsmittel pro 100 Teile Calciumaluminatzement; wobei die Teile von iv)-vii) als Feststoffgehalte ausgedrückt sind; und
die Gewichtsteile von viii) als aktive Komponente ausgedrückt sind;
wobei der Sulfatgehalt in der Mischung 1 Gew.-% nicht übersteigt und das Verhältnis von Wasser zu Calciumaluminatquelle wenige als 0,4 beträgt und
(c) Aufbringens auf das Substrat einer Beschichtungsaufschlämmung der Mischung aus Schritt (b); und
(d) Verursachens der Hydratisierung der Beschichtung auf dem Substrat aus Schritt (c) zum Dachziegel.

13. Verfahren nach Anspruch 12, wobei der Dachziegel in einem der Ansprüche 1 bis 10 beansprucht wird.

14. Verfahren nach Anspruch 12 oder 13, wobei die Beschichtungsaufschlämmung einen Setzwert zwischen 135-175 mm, bevorzugt 140-160 mm für eine Zeitspanne von mindestens 20 Minuten, bevorzugt mindestens 30 Minuten, aufweist.

15. Verfahren nach einem der Ansprüche 12 bis 14, wobei der Luftgehalt der Aufschlämmung weniger als 10 % beträgt und bevorzugt näher 5 % liegt.

16. Verfahren nach einem der Ansprüche 12 bis 15, wobei die Schritte (b) und (c) als Coextrusion durchgeführt werden.

17. Verfahren nach einem der Ansprüche 12 bis 15, wobei der Schritt (c) durch Streichen durchgeführt wird.

18. Verfahren nach einem der Ansprüche 12 bis 15, wobei der Schritt (c) durch das Glockenverfahren durchgeführt wird.

19. Verfahren nach einem der Ansprüche 12 bis 18, das ferner einen Abbindeschritt bei einer relativen Feuchte von 70 % bis 100 % und einer Temperatur von O °C bis 60 °C und für eine Zeitspanne von 30 Minuten bis 24 Stunden umfasst.

20. Verfahren nach einem der Ansprüche 12 bis 19, ferner eine Nachbehandlungsäurewäsche umfassend.

## Revendications

1. Tuile de toit comprenant :
(a) un substrat contenant :
i) du sable d'un diamètre de 4 mm ou moins ;
ii) un liant à base de ciment de Portland et
(b) un revêtement disposé sur ledit substrat, ledit revêtement résultant de l'hydratation et du durcissement d'un mélange comprenant :
i) un liant hydraulique comprenant au moins 35 % en poids d'alumine, ledit liant hydraulique contenant :
- au moins 60 % en poids d'une source d'aluminate de calcium comprenant un ciment d'aluminate de calcium ayant une teneur en alumine supérieure à 35 %, et
- pas plus de 1% en poids de sulfate,
- moins de 50 parties en poids de cendres volantes pour 100 parties de ciment d'aluminate de calcium ou 20 à 50 parties d'une autre matière pozzolanique ayant une teneur en alumine d'au moins 20 % en poids pour 100 parties de ciment d'aluminate de calcium,
ii) 50 à 200 parties en poids de sable pour 100 parties de ciment d'aluminate de calcium ; le sable ayant un grain de 0,6 mm ou moins ;
iii) moins de 10 parties en poids de charge de calcaire fin pour 100 parties de ciment d'aluminate de calcium ;
iv) moins de 6 parties en poids de pigment pour 100 parties de ciment d'aluminate de calcium ;
v) moins de 1,5 parties en poids de superplastifiant pour 100 parties de ciment d'aluminate de calcium ;
vi) moins de 1,5 parties en poids de modificateur de rhéologie pour 100 parties de ciment d'aluminate de calcium ;
vii) moins de 0,3 partie en poids de retardant pour 100 parties de ciment d'aluminate de calcium ;
viii) moins de 0,3 partie en poids d'agent antimousse pour 100 parties de ciment d'aluminate de calcium ;
ix) moins de 0,2 partie en poids d'épaississant pour 100 parties de ciment d'aluminate de calcium ;
les parties de iv) à vii) étant exprimées en termes de teneurs en solides ; et
les parties en poids de viii) étant exprimées en terme de composant actif ;
la teneur en sulfate dans le mélange n'excédant pas 1 % en poids et l'hydratation étant obtenue avec un rapport eau - source d'aluminate de calcium inférieur à 0,4.

2. Tuile de toit selon la revendication 1, dans laquelle le liant hydraulique comprend moins de 0,5 % en poids de sulfate et est de préférence sensiblement exempt de sulfate.

3. Tuile de toit selon l'une quelconque des revendications 1 à 2, dans laquelle la source d'aluminate de calcium comprend un ciment d'aluminate de calcium ayant une teneur en alumine supérieure à 45 %.

4. Tuile de toit selon l'une quelconque des revendications 1 à 3, dans laquelle la matière pozzolanique a une teneur en alumine d'au moins 30 % en poids.

5. Tuile de toit selon l'une quelconque des revendications 1 à 4, dans laquelle ledit liant hydraulique comprend au moins 80 % en poids d'une source d'aluminate de calcium.

6. Tuile de toit selon l'une quelconque des revendications 1 à 5, dans laquelle l'hydratation est obtenue avec un rapport eau - source d'aluminate de calcium entre 0,25 et 0,40.

7. Tuile de toit selon l'une quelconque des revendications 1 à 6, dans laquelle la matière de la tuile comprend en outre du sable ayant un diamètre maximal inférieur à 1 mm.

8. Tuile de toit selon l'une quelconque des revendications 1 à 7, dans laquelle la matière de tuile comprend au moins 32,5 % en poids de liant, de préférence environ 50 %.

9. Tuile de toit selon l'une quelconque des revendications 1 à 8, dans laquelle le revêtement possède une densité de 2,0 à 2,3 g/cm³.

10. Tuile de toit selon l'une quelconque des revendications 1 à 9, comprenant en outre un revêtement sur celle-ci.

11. Procédé de fabrication de la tuile de toit selon l'une quelconque des revendications 1 à 10, comprenant les étapes consistant à revêtir une surface extérieure d'un substrat fraîchement fabriqué avec une pâte et à durcir l'article et le revêtement ensemble.

12. Procédé de fabrication d'une tuile de toit, comprenant les étapes consistant à:
(a) fournir un substrat contenant :
i) du sable d'un diamètre de 4 mm ou moins ;
ii) un liant à base de ciment de Portland et
(b) mélanger de l'eau et un mélange cimentaire, comprenant :
i) un liant hydraulique comprenant au moins 35 % en poids d'alumine, le liant hydraulique contenant :
- au moins 60 % en poids d'une source d'aluminate de calcium comprenant un ciment d'aluminate de calcium ayant une teneur en alumine supérieure à 35 %, et
- pas plus de 1,0 % en poids de sulfate,
- moins de 50 parties en poids de cendres volantes pour 100 parties de ciment d'aluminate de calcium ou 20 à 50 parties d'une autre matière pozzolanique ayant une teneur en alumine d'au moins 20 % en poids pour 100 parties de ciment d'aluminate de calcium,
ii) 50 à 200 parties en poids de sable pour 100 parties de ciment d'aluminate de calcium ; le sable ayant un grain de 0,6 mm ou moins ;
iii) moins de 10 parties en poids de charge de calcaire fin pour 100 parties de ciment d'aluminate de calcium ;
iv) moins de 6 parties en poids de pigment pour 100 parties de ciment d'aluminate de calcium ;
v) moins de 1,5 parties en poids de superplastifiant pour 100 parties de ciment d'aluminate de calcium ;
vi) moins de 1,5 parties en poids de modificateur de rhéologie pour 100 parties de ciment d'aluminate de calcium ;
vii) moins de 0,3 partie en poids de retardant pour 100 parties de ciment d'aluminate de calcium ;
viii) moins de 0,3 partie en poids d'agent antimousse pour 100 parties de ciment d'aluminate de calcium ;
ix) moins de 0,2 partie en poids d'épaississant pour 100 parties de ciment d'aluminate de calcium ;
les parties de iv) à vii) étant exprimées en termes de teneurs en solides ; et
les parties en poids de viii) étant exprimées en terme de composant actif ;
la teneur en sulfate dans le mélange n'excédant pas 1 % en poids et l'hydratation étant obtenue avec un rapport eau - source d'aluminate de calcium inférieur à 0,4, et
(c) appliquer sur ledit substrat une suspension de revêtement du mélange de l'étape (b) ; et
(d) provoquer l'hydratation dudit revêtement sur le substrat de l'étape (c) dans la tuile de toit.

13. Procédé selon la revendication 12, dans lequel la tuile de toit est telle que revendiquée selon l'une quelconque des revendications 1 à 10.

14. Procédé selon la revendication 12 ou 13, dans lequel la suspension de revêtement a une valeur d'affaissement située entre 135 et 175 mm, de préférence 140 et 160 mm, pendant une durée d'au moins 20 minutes, de préférence d'au moins 30 minutes.

15. Procédé selon l'une quelconque des revendications 12 à 14, dans lequel la teneur en air de la suspension est inférieure à 10 % et de préférence plus près de 5 %.

16. Procédé selon l'une quelconque des revendications 12 à 15, dans lequel les étapes (b) et (c) sont réalisées sous forme de co-extrusion.

17. Procédé selon l'une quelconque des revendications 12 à 15, dans lequel l'étape (c) est réalisée par une application à la brosse.

18. Procédé selon l'une quelconque des revendications 12 à 15, dans lequel l'étape (c) est réalisée par le procédé à la cloche.

19. Procédé selon l'une quelconque des revendications 12 à 18, qui comprend en outre une étape de durcissement à une humidité relative allant de 70 % à 100 % et à une température allant de 0°C à 60°C et pendant une durée allant de 30 minutes à 24 heures.

20. Procédé selon l'une quelconque des revendications 12 à 19, comprenant en outre un lavage à l'acide post-traitement.
